Europäisches Patentamt

**European Patent Office**

**Office européen des brevets**

(11) Veröffentlichungsnummer: **0 024 308**
**A1**

(12) **EUROPÄISCHE PATENTANMELDUNG**

(21) Anmeldenummer: **80104281.3**

(22) Anmeldetag: **21.07.80**

(51) Int. Cl.³: **H 04 L 9/02**

(30) Priorität: **17.08.79 CH 7551/79**

(43) Veröffentlichungstag der Anmeldung: **04.03.81**
Patentblatt 81/9

(84) Benannte Vertragsstaaten: **AT BE DE FR GB IT NL SE**

(71) Anmelder: **Crypto Aktiengesellschaft, Zugerstrasse 42, CH-6312 Steinhausen (CH)**

(72) Erfinder: **Stürzinger, Oskar, Kirchmattweg 6, CH-6340 Baar (CH)**
Erfinder: **Gemperle, Bruno, Albisstrasse 48, CH-6312 Steinhausen (CH)**

(74) Vertreter: **Schaad, Walter F. et al, Patentanwälte W.F. Schaad, V. Balass E.E. Sandmeier Dufourstrasse 101, CH-8008 Zürich (CH)**

(54) Verfahren und Vorrichtung zur Ver- und Entschlüsselung von Informationen.

(57) Die sendeseitig zu verarbeitende Klarinformation (1) wird durch Gruppen von Klarinformationssignalen (2) gebildet, die durch Trennsignale (4, 5) voneinander getrennt sind. Bei fehlenden Klarinformationssignalen (2) werden zwischen die Klarinformationssignalgruppen Füllsignale (11) eingegeben, die ebenfalls durch Trennsignale (13, 14) getrennt sind. Auf der Sendeseite werden nun ausser den Klarinformationssignalen (2) und gegebenenfalls den Füllsignalen (11) alle oder ein Teil der Trennsignale (4, 5, 13, 14) ebenfalls verschlüsselt. Der auf dem Übertragungsweg erscheinende Signalstrom (4', 5, 9, 13', 14, 18) ist nicht mehr in klar erkennbare Weise in einzelne Pakete aufgeteilt. Um auf der Empfangsseite ein Trennen von Informationssignalen (2) und bezüglich Informationsgehalt bedeutungslosen Füllsignalen (11) zu ermöglichen, werden im Zuge des sendeseitigen Verschlüsselns die Trennsignale (13') zwischen den Füllsignalen (11) mit einer entsprechenden Kennzeichnungsinformation versehen.

Verfahren und Vorrichtung zur Ver- und Entschlüsselung
von Information

Die vorliegende Erfindung betrifft ein Verfahren und eine
Vorrichtung zur Ver- und Entschlüsselung von Information
gemäss Oberbegriff des Anspruches 1 bzw. des Anspruches 5.

In der Fernmeldetechnik wird die Information häufig in
dual-codierter Form entweder als kontinuierlicher Impulszug oder in Form von Impulspaketen übertragen. Ein klassisches Beispiel für eine solche Informationsübertragung
stellt der in der Fernschreibtechnik verwendete CCITT-Code
Nr. 2 dar. Bei diesem Code wird jedes Zeichen durch eine
Kombination von fünf Dual-Impulsen gleicher Länge dargestellt. Beim Start-Stop-Verfahren werden vor und nach jeder ein Zeichen darstellenden Impulsgruppe ein Start- und
ein Stopschritt hinzugefügt, um ein Gleichlaufen der Sende- und Empfangsapparaturen zu gewährleisten. Der Startschritt hat dieselbe, der Stopschritt die 1,4fache Länge
eines Informationsschrittes.

Beim CCITT-Code Nr. 5, bei dem jedes Zeichen durch eine

0024308

Kombination von acht Dual-Impulsen dargestellt wird, hat der Startschritt ebenfalls dieselbe Länge wie ein Informationsschritt, während der Stopschritt die doppelte Länge aufweist.

Unter Berücksichtigung dieser Gegebenheiten ist es heute möglich, Uebertragungssysteme zu schaffen, welche auf zuverlässige Weise synchron arbeiten, ohne dass der Aufbau der Zeichengruppen verändert wird. Bei synchron laufenden Uebertragungssystemen dieser Art, von denen beispielsweise eines in der CH-PS 495 096 beschrieben ist, werden nun in den Zeitabschnitten, in denen sendeseitig kein Klartext zur Verarbeitung ansteht, bezüglich Informationsgehalt belanglose Füllzeichen auf den Uebertragungsweg gegeben, die mindestens die üblichen Trennzeichen, d.h. Start-Stop-Schritte, umfassen, um den Sender so lange als möglich in gleicher Phase zu halten bzw. nach allfälligen Verbindungsunterbrüchen wieder in Gleichlauf zu bringen.

Der Signalfluss auf dem Uebertragungsweg erlaubt es nun, diejenigen Zeitabschnitte zu erkennen, in denen informationsträchtige Zeichen übermittelt werden, da ja die Pausen zwischen den Informationssignalen infolge der gleichartigen Füllsignale ohne weiteres erkennbar sind. Selbst wenn diese informationsträchtigen Zeichen verschlüsselt sind, können Drittpersonen nur schon aufgrund des Meldungsumfanges Rückschlüsse auf die Aktivität auf der Sende- und Empfangsseite ziehen.

Eine verschlüsselte Uebertragung der Füllsignale wäre auch

- 3 -          0024308

nicht geeignet, diesem Uebelstand abzuhelfen. Da in den erwähnten Zeitabschnitten auf der Sendeseite stets gleichartige Füllzeichen verschlüsselt werden, sind kryptologische Einbrüche möglich, auch wenn heute diesbezüglich sichere Schlüsselgeneratoren bekannt sind.

Die vorliegende Erfindung bezweckt nun, diese Nachteile zu beseitigen. Es stellt sich somit die Aufgabe, ein Verfahren bzw. eine Vorrichtung der eingangs genannten Art zu schaffen, das bzw. die ein Erkennen des Aufbaues der übertragenen Signalfolge entlang der Uebertragungsstrecke verunmöglicht.

Diese Aufgabe wird gemäss kennzeichnendem Teil des Anspruches 1 bzw. des Anspruches 5 gelöst.

Durch die zumindest teilweise Verschlüsselung der sowohl die Informationssignale wie auch die Füllsignale trennenden Trennsignale erscheint die Signalfolge auf der Uebertragungsstrecke nicht mehr als in erkennbare Signalgruppen unterteilt, sondern bildet einen unstrukturierten Dauersignalstrom, bei dem eine Abgrenzung in einzelne informationsträchtige bzw. als Füllzeichen dienende Signalpakete nicht mehr möglich ist. Der Aufbau der Signalfolge lässt sich somit nicht mehr erkennen. Der Grundaufbau der Informationssignalgruppen bleibt bei der erfindungsgemässen Lösung als solcher erhalten.

Um nun empfangsseitig ein Ausscheiden der Füllsignale aus dem Signalstrom zu ermöglichen, wird vorzugsweise zumindest ein Teil der den Gruppen von Füllsignalen vorangehenden Trennsignale sendeseitig mit einer Kennzeichnungsinformation versehen, aufgrund welcher auf der Empfangseite festgestellt wird, dass die nachfolgende Signalgruppe bezüglich Informationsgehalt bedeutungslos ist. Die Empfangsstation kann nun aufgrund der sendeseitig gekennzeichneten Trennsignale feststellen, dass die nachfolgenden Signale Füllsignale sind, die bezüglich Informationsgehalt bedeutungslos sind und demzufolge für die nachfolgende Informationsverarbeitung nicht benötigt werden.

Im folgenden wird die Erfindung anhand der Zeichnung näher erläutert. Es zeigen schematisch:

Fig. 1 und 2      verschiedene zur Erläuterung von Verschlüsselungsvorgängen dienende Impuls- Zeit- Diagramme, und

Fig. 3      ein Blockschaltbild einer Verschlüsselungs- und Entschlüsselungsvorrichtung mit Sende- und Empfangsstation.

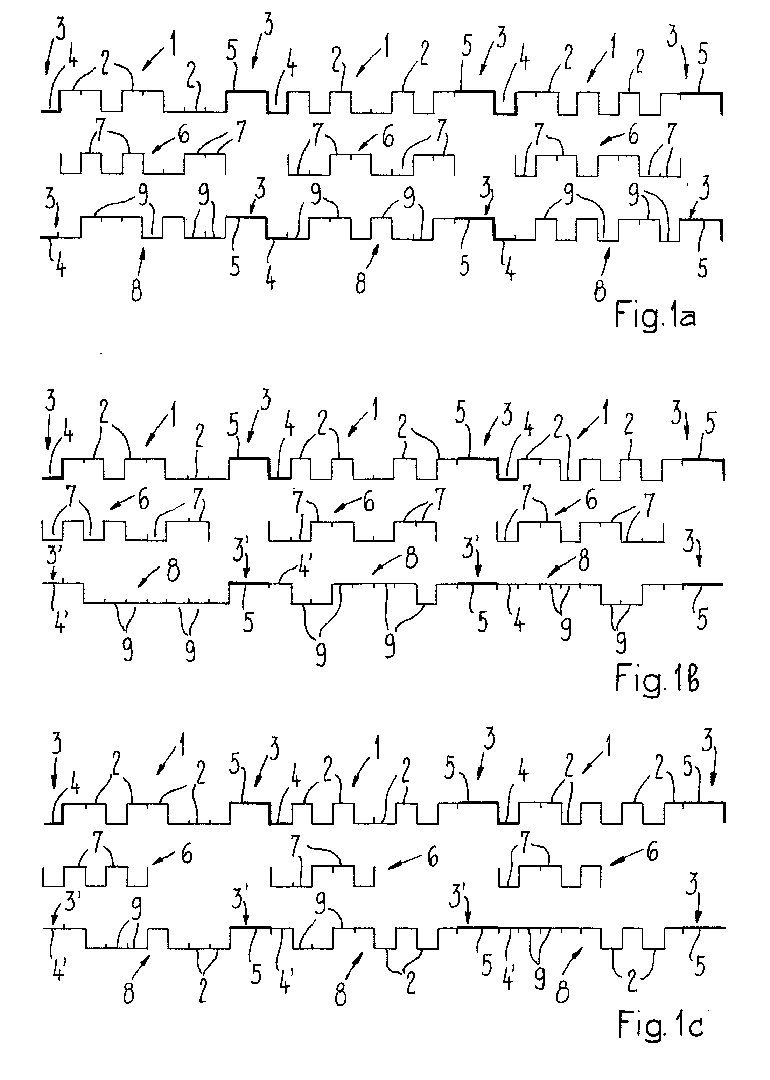

Anhand der Figuren 1a bis 1d wird nun die Verschlüsselung von Klarzeichen 1 erläutert, welche im CCITT-Code Nr. 5 dargestellt sind. Wie aus dem in diesen Fig. zuobert dargestellten Impulszug hervorgeht, besteht jedes dieser Klarzeichen 1 aus acht Zeichenelementen, die durch digitale Klarinformationssignale 2 gleicher Länge gebildet sind. Diese Klarzeichen 1 sind durch Trennzeichen 3 voneinander

0024308

getrennt, die durch ein Trennsignal 4 (Startschritt) und ein Trennsignal 5 (Stopschritt) gebildet sind. Gemäss dem erwähnten CCITT-Code Nr. 5 hat das den Startschritt darstellende Trennsignal 4 gleiche Länge wie die Klarinformationssignale 2, während das den Stopschritt bildende Trennsignal 5 die doppelte Länge aufweist.

In den Fig. 1a - 1d stellen die mittleren Impulsserien Schlüsselzeichen 6 dar, welche aus einer gegebenen Anzahl von Schlüsselzeichensignalen 7 bestehen. Der unterste Impulszug stellt das Ergebnis der Verschlüsselung dar.

In Fig. 1a ist die bekannte Art der Verschlüsselung dargestellt. Die Schlüsselzeichen 6 weisen dieselbe Anzahl von Zeichenelementen 7 auf, wie die Klarzeichen 1, d.h. ebenfalls acht. Die Verschlüsselung der Klarzeichen 1 erfolgt nun zeichenelementenweise Modulo 2, d.h. mittels Exklusiv-Oder-Verknüpfung. Das Ergebnis dieser Verknüpfung ist im untersten Impulszug dargestellt, in dem die verschlüsselten Informationszeichen mit 8 und die verschlüsselten Informationssignale mit 9 bezeichnet sind. Bei dieser bekannten Verschlüsselung werden die Trennzeichen 3, d.h. die Trennsignale 4 und 5 nicht in den Verschlüsselungsvorgang einbezogen. Die Trennsignale 4, 5 sind nun im verschlüsselten Impulszug als solche klar erkennbar, wie das aus der Fig. 1a deutlich hervorgeht. Die Unterteilung in die einzelnen verschlüsselten Informationszeichen 8 lässt sich somit ohne weiteres feststellen.

Um dies nun zu vermeiden, werden    erfindungsgemäss die-

0024308

se Trennsignale 4, 5 ganz oder teilweise in den Verschlüsselungsvorgang einbezogen, wie das anhand der Fig. 1b - d erläutert wird.

Beim Beispiel gemäss Fig. 1b weisen die Schlüsszenzeichen 6 wiederum die gleiche Anzahl von Zeichenelementen 7 auf, wie im Beispiel gemäss Fig. 1a, d.h. ebenfalls acht Zeichenelemente 7, die ebenfalls durch Digitalsignale dargestellt werden. Im Gegensatz zur Fig. 1a sind diese Schlüsselzeichen 6 gegenüber den Klarzeichen 1 um die Länge eines Zeichenelementes 2 bzw. 7 verschoben, so dass beim Verschlüsseln jeweils auch das Trennsignal 4, d.h. der Startschritt, mitverschlüsselt wird. Das hinterste Zeichenelement 2 jedes Klarzeichens 1 wird jedoch keiner Verschlüsselung unterworfen. Der unterste Impulszug der Fig. 1b zeigt das Resultat dieser Verschlüsselung, wobei die verschlüsselten Informationszeichen ebenfalls mit 8 und die verschlüsselten Informationssignale mit 9 bezeichnet sind. Die teilweise verschlüsselten Trennzeichen 3' werden somit durch ein verschlüsseltes Trennsignal 4' und das unverschlüsselte Trennsignal 5 gebildet.

Bei der Variante gemäss Fig. 1c weisen die Schlüsselzeichen 6 nur fünf Zeichenelemente 7 auf, also weniger als die Klarzeichen 1. Auch in diesem Fall sind die Schlüsselzeichen 6 um die Länge eines Zeichenelementensignales 2,7 bezüglich den Klarzeichen 1 versetzt, um wie anhand der Fig. 1b bereits erläutert eine Verschlüsselung des Trennsignales 4 (Startschritt) zu bewirken. Die verschlüsselten Informationszeichen 8 bestehen nun sowohl aus verschlüsselten Informationssignalen 9 wie auch aus unverschlüsselten Informationssignalen 2, während bei den verschlüsselten Trennzeichen 3' das eine Trennsignal 4' verschlüsselt und das andere Trennsignal 5 nicht verschlüsselt ist.

Bei der Variante gemäss Fig. 1d wird jedes Schlüsselzeichen 6 durch zehn durch Digital-Signale dargestellte Zeichenelemente 7 gebildet, also durch eine grössere Anzahl von Zeichenelementen als die Klarzeichen 1. Es erfolgt somit nicht nur eine vollständige Verschlüsselung der Klarzeichen 1 sondern auch eine solche der Trennzeichen 4 (Startschritt) und der Hälfte des Trennzeichens 5 (Stopschritt). Der durch diese Verschlüsselung erhaltene Impulszug besteht nun aus verschlüsselten Informationszeichen 8, die vollständig aus verschlüsselten Informationssignalen 9 bestehen, und durch verschlüsselte Trennsignale 4' und teilweise verschlüsselte Trennsignale 5'.

Es versteht sich, dass es selbstverständlich auch möglich ist, die Trennzeichen 3 vollständig und nicht nur wie dargestellt teilweise zu verschlüsseln. Die Schlüsselzeichen 6 können aus der gleichen, einer kleinern oder auch aus einer grösseren Anzahl von Zeichenelementen 7 bestehen wie die Klarzeichen 1.

Wie die Fig. 1b - d deutlich zeigen, ist der durch die Verschlüsselung erhaltene Impulszug nicht mehr durch als solche ohne weiteres erkennbare Trennzeichen in einzelne Informationssignalgruppen 8 unterteilt, wie das beim Beispiel gemäss Fig. 1a der Fall ist.

0024308

Es ist auch möglich und bereits bekannt, die Verschlüsselung nicht wie erwähnt zeichenelementenweise durchzuführen, sondern klarzeichenweise (siehe beispielsweise CH-PS 382 216).

Wie bereits eingangs erwähnt, werden bei fehlenden Klarzeichen 1 sendeseitig in die Lücken zwischen aufeinanderfolgenden Klarzeichen 1 Füllzeichen eingegeben, die als solche den gleichen Aufbau haben wie die Klarzeichen 1 und ebenfalls durch Trennzeichen voneinander getrennt sind. Diese Füllzeichen dienen wie bereits erwähnt zur Synchronisation von Sende- und Empfangsseite.

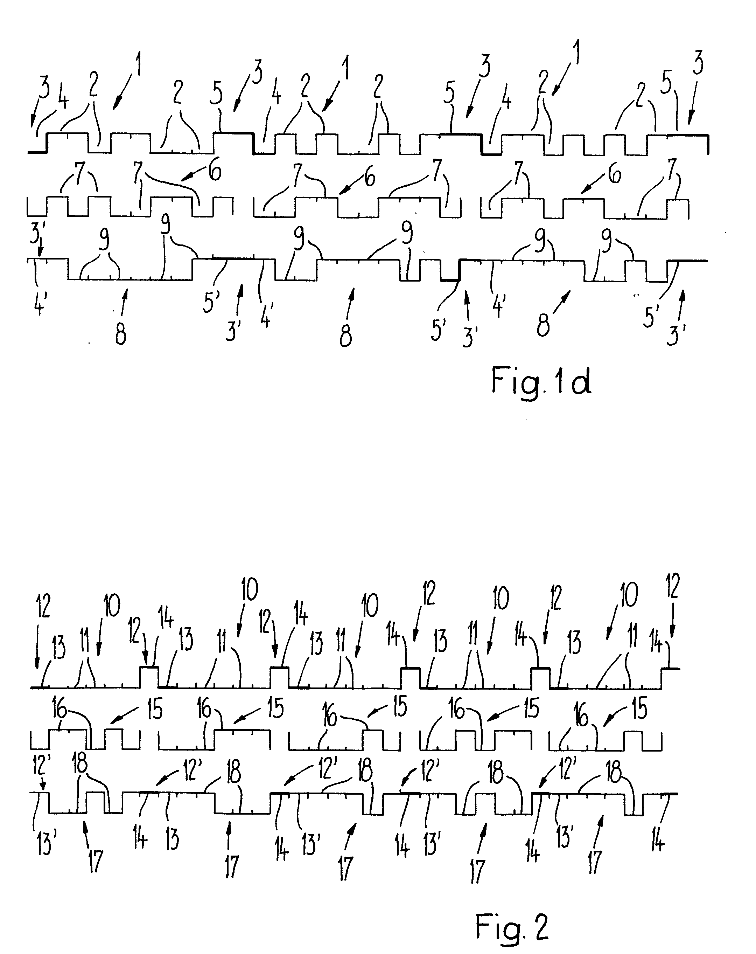

In Fig. 2 ist nun die Verschlüsselung dieser Füllzeichen und der zugehörigen Trennzeichen dargestellt, wobei im Gegensatz zur Fig. 1 für diese Darstellung der CCITT-Code Nr. 2 gewählt ist, bei dem bekanntlich ein Zeichen aus fünf durch Digital-Signale gebildete Zeichenelementen besteht. Im obersten Impulszug der Fig. 2 sind diese Füllzeichen mit 10 und die diese bildenden Füllsignale mit 11 bezeichnet. Diese Füllzeichen 10 entsprechen der Kombination Nr. 32, können jedoch einer andern Kombination, z.B. der Kombination Nr. 29 oder Nr. 30, entsprechen. Die Füllzeichen 10 sind wie erwähnt durch Trennzeichen 12 voneinander getrennt, die durch ein erstes Trennsignal 13 (Startschritt) und ein zweites Trennsignal 14 (Stopschritt) gebildet werden. Die durch die in der Mitte gezeigten Impulsgruppen dargestellten Schlüsselzeichen 15 bestehen aus sechs durch Digital-Signale gebildete Schlüsselzeichensignalen 16. Die Anzahl der Zeichenelemente 16 der Schlüs-

0024308

selzeichen 15 ist demzufolge grösser als die Anzahl der Zeichenelemente 11 der Füllzeichen 10. Die Verschlüsselung erfolgt auf die bereits anhand der Fig. la beschriebene Weise zeichenelementenweise Modulo 2. Das Ergebnis dieses Verschlüsselungsvorganges ist im untersten Impulszug der Fig. 2 dargestellt, in welchem die verschlüsselten Füllzeichen mit 17 und die verschlüsselten Füllsignale mit 18 bezeichnet sind. Die verschlüsselten Trennzeichen 12' werden durch ein verschlüsseltes Trennsignal 13' (Startschritt) und das unverschlüsselte Trennsignal (Stopschritt) gebildet.

Da nun der durch die Verschlüsselung der Füllzeichen 10 erhaltene Impulszug gemäss Fig. 2 sich aufbaumässig nicht mehr vom Impulszug unterscheidet, der durch Verschlüsselung der Klarzeichen 1( Fig. 1b - d) erhalten wird, muss nun dafür gesorgt werden, dass auf der Empfangsseite unterschieden werden kann, ob die empfangenen Zeichen eigentliche Informationszeichen sind, die entschlüsselt und an den Empfänger weitergeleitet werden müssen, oder ob es sich um Füllzeichen handelt, die bezüglich Informationsgehalt bedeutungslos sind, und nicht an den Empfänger weiterzuleiten sind.

Zu diesem Zweck wird beim Verschlüsselungsvorgang alle oder ein Teil der Trennzeichen 12 ganz oder teilweise mit einer Kennzeichnungsinformation versehen. Empfangsseitig kann nun aufgrund dieser gekennzeichneten Trennzeichen 12 festgestellt werden, dass die folgende Signalgruppe ein Füllzeichen darstellt.

Wie die Fig. 2 zeigt, kann diese Kennzeichnung der Trennzeichen 12 dadurch erfolgen, dass durch die Verschlüsselung das Trennsignal 13 (Startschritt) den andern Zustand
erhält. Hat dieses Trennsignal 13 vor der Verschlüsselung
den Zustand "0", so besitzt das verschlüsselte Trennsignal 13' den Zustand "1", wie das die Fig. 2 zeigt.
Dies kann bei einer Verknüpfung Modulo 2 ohne weiteres
dadurch erreicht werden, dass das entsprechende Schlüsselzeichenelement 16 ebenfalls den Zustand "0" aufweist.

Wie aus dem untersten Impulszug in Fig. 2 hervorgeht,
folgt somit auf jedes Trennsignal 14 (Stopschritt) das verschlüsselte Trennsignal 13', das denselben Zustand aufweist wie das vorangehende Trennsignal 14. Dadurch ist es
empfangsseitig möglich, festzustellen, dass die folgende
Signalgruppe 17 kein informationsträchtiges Zeichen darstellt. Die Kennzeichnung der Trennzeichen 12 kann selbstverständlich auch auf andere Weise erfolgen.

Diese Kennzeichnung der die Füllzeichen 10 voneinander
trennenden Trennzeichen 12 ist vor allem dann wichtig,
wenn der verwendete Code im Gegensatz zum CCITT-Code Nr. 2
keine belanglosen Leerzeichen aufweist, wie das beispielsweise für den im Nahen Osten bzw. in Südostasien verwendeten Fernschreibcode der Fall ist. Hier gibt das gekennzeichnete Trennzeichen 12 der Empfangsseite an, dass die
nachfolgende Signalgruppe, die ansich informationsträchtig
sein könnte, lediglich zu Füllzwecken dient.

Die Trennzeichen 12 können anstatt wie gezeigt nur teilweise auch vollständig verschlüsselt werden. Die Füllzeichen 10 können anstatt vollständig auch nur teilweise
oder garnicht verschlüsselt werden. Die Schlüsselzeichen
15 können eine Anzahl von Schlüsselzeichenelementen 16
aufweisen, die gleich, kleiner oder grösser ist als die
Anzahl der die Füllzeichen 10 bildenden Zeichenelemente 11.

Wie bereits erwähnt ist der durch die Verschlüsselung der
Füllsignalfolge erhaltene Impulszug gleich aufgebaut wie
der verschlüsselte Informationsimpulszug (siehe jeweils
die untersten Impulszüge in den Fig. 1b - d und 2). Es
lässt sich somit nicht mehr erkennen, ob eigentliche Information oder nur Füllzeichen übertragen werden.

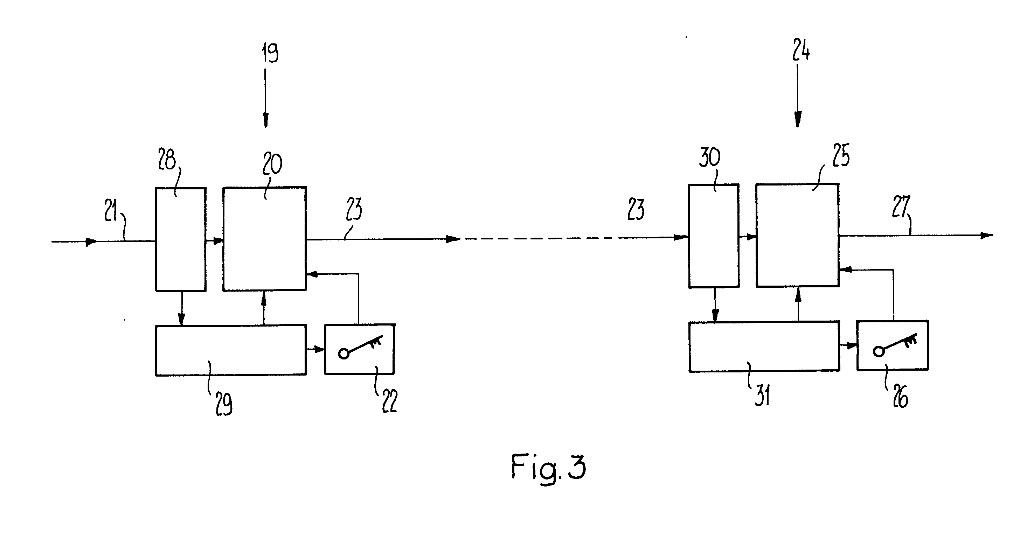

Anhand der Fig. 3 wird nun eine Einrichtung zum Ver- und
Entschlüsseln beschrieben, welche gemäss dem vorstehend
erwähnten Prinzip arbeitet.

Die Sendestation 19 weist ein Verschlüsselungsgerät 20
auf, dem von einer nicht dargestellten Nachrichtenquelle
über eine Eingangsleitung 21 die zu verschlüsselnde Information zugeführt wird. Diese Information wird wie anhand der Figuren 1b - d erläutert in Form von Informationssignalgruppen 1, welche durch Trennzeichen 4, 5 getrennt
sind, dem Verschlüsselungsgerät 20 eingegeben. Bei fehlenden Informationssignalgruppen 1 erscheinen auf der Eingangsleitung Füllsignalgruppen 10, die durch Trennsignale
13, 14 getrennt sind, wie das anhand der Fig. 2 erläutert
worden ist. An dieses Verschlüsselungsgerät 20 ist ein
Schlüsselgenerator 22 angeschlossen, der dem Verschlüsselungsgerät 20 die zur Verschlüsselung erforderlichen Schlüsselzeichen zuführt. Die das Verschlüsselungsgerät 20 verlassenden, ganz oder teilweise verschlüsselten Zeichen werden auf eine Uebertragungsleitung 22 gegeben und an eine Empfangsstation 24 übermittelt. Diese Uebermittlung kann auch drahtlos erfolgen.

Zur Entschlüsselung der empfangenen verschlüsselten Information weist die Empfangsstation 24 ein Entschlüsselungsgerät 25 auf, das die zur Entschlüsselung erforderlichen Schlüsselzeichen von einem Schlüsselgenerator 26 erhält. Die entschlüsselte Information wird über eine Ausgangsleitung 27 einer nicht dargestellten Nachrichtensenke zugeführt.

Die Schlüsselgeneratoren 22, 26 der Sende- und Empfangsstation 19, 24 werden in der Regel aus einem Grundschlüsselspeicher und einem Schlüsselzeichenerzeuger bestehen wie das ansich bekannt ist.

Aufbau und Wirkungsweise des Verschlüsselungsgerätes 20 bzw. des Entschlüsselungsgerätes 25 und der Schlüsselgeneratoren 22, 26 ist ansich bekannt. Es wird anstelle einer ausführlichen Beschreibung z.B. auf die CH-PSen 374 717, 429 253, 443 744 und 464 287 verwiesen.

Die Synchronisation zwischen sendeseitiger Verschlüsselung und empfangsseitiger Entschlüsselung kann beispielsweise auf die in den CH-PSen 515 576 und 581 930 beschriebene Weise erfolgen.

Um nun sendeseitig die anhand der Fig. 1b - d und 2 beschriebene Verschlüsselung richtig durchführen zu können, weist die Sendestation eine Steuerschaltung auf, die aus einer dem Verschlüsselungsgerät 20 vorgeschalteten Signalauswerteschaltung 28 und einer Steuerstufe 29 besteht, welche einerseits an die Signalauswerteschaltung 28 und andererseits sowohl an das Verschlüsselungsgerät 20 wie auch an den Schlüsselgenerator 22 angeschlossen ist. Diese Steuerstufe 11 steuert den Ablauf der Verschlüsselung. Stellt die Signalauswerteschaltung 28 fest, dass die über die Eingangsleitung 21 ankommenden Signale Füllsignale 11 sind, die bezüglich Informationsgehalt bedeutungslos sind, so wirkt sie über die Steuerstufe 29 auf das Verschlüsselungsgerät 20 und den Schlüsselgenerator 22 ein, um eine Verschlüsselung der Füllzeichen 10 und der Trennzeichen 12 wie anhand der Fig. 2 beschrieben, zu bewirken. Beim Vorliegen von Klarzeichen 1 erfolgt eine entsprechende Ansteuerung von Verschlüsselungsgerät 20 und Schlüsselgenerator 22 über die Signalauswerteschaltung 28 und die Steuerstufe 29, damit die Verschlüsselung der Klarzeichen 1 und der Trennzeichen 3 auf die anhand der Fig. 1b - d beschriebene Weise erfolgt.

Es ist auch möglich, die Signalauswerteschaltung 28 so auszubilden, dass sie in den Pausen zwischen den über die Eingangsleitung 21 ankommenden Klarzeichen 1 die Füllzeichen 10 und die Trennzeichen 12 selber erzeugt. In diesem Fall ist die Nachrichtenquelle von der Erzeugung dieser Füllzeichen 10 und Trennzeichen 12 entbunden. Auch in diesem Falle erfolgt die Verschlüsselung dieser Füllzei-

0024308

chen 10 und der Trennzeichen 12 auf die bereits beschriebene Weise.

Empfangsseitig ist dem Entschlüsselungsgerät 25 ebenfalls eine Signalauswerteschaltung 30 vorgeschaltet, welche mit einer Steuerstufe 31 verbunden ist, welche an das Entschlüsselungsgerät 25 und an den Schlüsselgenerator 26 angeschlossen ist. Gleich wie auf der Sendeseite steuert die Signalauswerteschaltung 30 und die Steuerstufe 31 den Ablauf des Entschlüsselungsvorganges. Die Signalauswerteschaltung 30 stellt, wie das anhand der Fig. 2 bereits beschrieben worden ist, das Vorhandensein von sendeseitig mit einer Kennzeichnungsinformation versehenen Trennsignale 13' fest. Aufgrund dieser gekennzeichneten Trennsignale 13' bewirkt diese Signalauswerteschaltung 30, dass die diesem Trennsignal 13' folgenden Füllsignale 18 nicht über die Ausgangleitung 27 der Nachrichtensenke zugeführt werden. Stellt die Signalauswerteschaltung 30 jedoch das Vorhandensein von verschlüsselten Informationssssignalen 9 fest, so bewirkt sie über die Steuerstufe 31 eine Entschlüsselung dieser Informationssignale 9, die nach erfolgter Entschlüsselung als Klarinformationssignale über die Leitung 27 an die Nachrichtensenke weitergegeben werden.

Falls die Füllzeichen ganz oder teilsweise unverschlüsselt über die Uebertragungsleitung 23 zu übermitteln sind, so wird das Verschlüsselungsgerät 20 über die Signalauswerteschaltung 28 und die Steuerstufe 29 entsprechend angesteuert. Es sei jedoch darauf hingewiesen, dass auch bei unverschlüsselter Uebertragung der Füllzeichen 10 die Trennzeichen 12 zwischen diesen Füllzeichen 10 ganz oder teilweise verschlüsselt werden.

Die Füllzeichen 10 können mit Hilfe derselben Schlüsselgeneratoren 22 bzw. 26 verschlüsselt bzw. entschlüsselt werden, die auch bei der Ver- und Entschlüsselung der Informationssignale 1, 9 Verwendung finden. Es ist jedoch auch
möglich, für die Ver- und Entschlüsselung dieser Füllzeichen 10, 18        eigene   zusätzliche   Schlüsselgeneratoren
vorzusehen.

Da unabhängig davon, ob die Füllzeichen 10 verschlüsselt
oder unverschlüsselt übertragen werden, die Trennzeichen
3 und 12 zumindest zum Teil verschlüsselt werden, so erscheint auf der Uebertragungsstrecke 23 ein nichtstrukturierter Impulsstrom, bei welchem eine Abgrenzung in einzelne Signalpakete nicht mehr möglich ist.

Es versteht sich, dass sich das vorstehend erläuterte Verfahren und die beschriebene Vorrichtung entsprechend auch
für die Verarbeitung von andern als dual organisierten
Impulsströmen anwenden lassen.

PATENTANSPRUECHE

1. Verfahren zur Ver- und Entschlüsselung von Information, bei dem auf der Sendeseite die durch Trennsignale voneinander getrennten Klarinformationssignalgruppen verschlüsselt werden und auf der Empfangsseite eine entsprechende Entschlüsselung erfolgt, wobei sendeseitig bei fehlenden Klarinformationssignalen zwischen die Informationssignalgruppen bezüglich Informationsgehalt bedeutungslose Füllsignale eingeschoben werden, die ebenfalls durch Trennsignale unterteilt sind, dadurch gekennzeichnet, dass zumindest ein Teil der Trennsignale (4, 5, 13, 14) sendeseitig verschlüsselt wird.

2. Verfahren nach Anspruch 1, dadurch gekennzeichnet, dass zumindest ein Teil der Füllsignale (11) sendeseitig verschlüsselt wird.

3. Verfahren nach Anspruch 2, dadurch gekennzeichnet, dass die zur Verschlüsselung bzw. Entschlüsselung der Füll-

13.8.1979
Al:vm

A 3131 CH

zeichen (10) verwendeten Schlüsselzeichen (15) durch mehrere Zeichenelemente (16) gebildet werden, deren Anzahl gleich, grösser oder kleiner ist als die Anzahl der jeweils ein Füllzeichen (10) bildenden Zeichenelemente (11).

4. Verfahren nach einem der Ansprüche 1 - 3, dadurch gekennzeichnet, dass zumindest ein Teil der den Gruppen von Füllsignalen (11) vorangehenden Trennsignale (13, 14) sendeseitig mit einer Kennzeichnungsinformation versehen wird, aufgrund welcher auf der Empfangsseite festgestellt wird, dass die nachfolgende Signalgruppe bezüglich Informationsgehalt bedeutungslos ist.

5. Vorrichtung zur Ver- und Entschlüsselung von Information, mit einer auf der Sendeseite angeordneten Verschlüsselungseinrichtung, die den in Form von Informationssignalgruppen, welche durch Trennsignale voneinander getrennt sind, empfangenen Klartext mittels Schlüsselzeichen verschlüsselt und mit einer auf der Empfangsseite angeordneten Entschlüsselungseinrichtung, die mittels Schlüsselzeichen die empfangene Information entschlüsselt, wobei auf der Sendeseite bei fehlendem Klartext zwischen die Klarinformationssignalgruppen bezüglich Informationsgehalt bedeutungslose Füllsignale eingeschoben werden, welche ebenfalls durch Trennsignale unterteilt sind, dadurch gekennzeichnet, dass die Verschlüsselungseinrichtung (20, 22) zumindest einen Teil der Trennsignale (4, 5, 13, 14) verschlüsselt.

6. Vorrichtung nach Anspruch 5, dadurch gekennzeichnet, dass die Verschlüsselungseinrichtung (20, 22) zumindest einen Teil der Füllsignale (11) verschlüsselt.

7. Vorrichtung nach Anspruch 5 oder 6, dadurch gekennzeichnet, dass mit der Verschlüsselungseinrichtung (20, 22) eine Steuerschaltung (28, 29) verbunden ist, welche bei Vorhandensein von Füllsignalen (11) bewirkt, dass beim Verschlüsseln der diese Füllsignale (11) trennenden Trennsignale (13,14) wenigstens ein Teil der letzteren mit einer Kennzeichnungsinformation versehen wird, und dass mit der Entschlüsselungseinrichtung (25, 26) ebenfalls eine Steuerschaltung (30, 31) verbunden ist, welche aufgrund der empfangenen, mit einer Kennzeichnungsinformation versehenen Trennsignale (13, 14) das Vorhandensein von bezüglich Informationsgehalt bedeutungslosen Füllsignalen (11) feststellt.

8. Vorrichtung nach Anspruch 7, dadurch gekennzeichnet, dass die sendeseitige Steuerschaltung eine der Verschlüsselungseinrichtung (20, 22) vorgeschaltete Signalauswerteschaltung (28) sowie eine Steuerstufe (29) aufweist, die an die Signalauswerteschaltung (28) und an die Verschlüsselungseinrichtung (20, 22) angeschlossen ist, wobei diese Steuerstufe (29) bei durch die Signalauswerteschaltung (28) festgestelltem Vorhandensein von Füllsignalen (11) auf die Verschlüsselungseinrichtung (20, 22) einwirkt, um wenigstens einen Teil der Trennsignale (13, 14) zwischen den Füllsignalen (11) mit der Kennzeichnungsinformation zu versehen.

9.  Vorrichtung nach Anspruch 8, dadurch gekennzeichnet, dass die Signalauswerteschaltung (28) bei fehlenden Informationssignalen (2) Füllsignale (11) erzeugt.

10.  Vorrichtung nach einem der Ansprüche 7 - 9, dadurch gekennzeichnet, dass die empfangseitige Steuerschaltung eine der Entschlüsselungseinrichtung (25, 26) vorgeschaltete Signalauswerteschaltung (30) und eine Steuerstufe (31) aufweist, die an die Signalauswerteschaltung (30) und die Verschlüsselungseinrichtung (25, 26) angeschlossen ist, wobei die Signalauswerteschaltung (30) beim Feststellen von mit Kennzeichnungsinformation versehenen Trennsignalen (13, 14) über die Steuerstufe (31) in der Entschlüsselungseinrichtung (25, 26) eine Trennung der nachfolgenden Füllsignale (11) von den Informationssignalen (2) bewirkt.

11.  Vorrichtung nach einem der Ansprüche 7 - 10, dadurch gekennzeichnet, dass die Verschlüsselungseinrichtung (20, 22) und die Entschlüsselungseinrichtung (25, 26) zwei die Schlüsselzeichen (6, 15) erzeugende Schlüsselgeneratoren aufweist, von denen der eine zum Ver- bzw. zum Entschlüsseln der Informationssignale (2) und der diese trennenden Trennsignale (4, 5) und der andere zum Ver- bzw. Entschlüsseln der Füllsignale (11) und der diese trennenden Trennsignale (13, 14) dient.

0024308

Fig.1a

Fig.1B

Fig.1c

0024308

Fig. 1d

Fig. 2

Fig. 3

| Kategorie | EINSCHLÄGIGE DOKUMENTE | | KLASSIFIKATION DER ANMELDUNG (Int. Cl.³) |
|---|---|---|---|
| | Kennzeichnung des Dokuments mit Angabe, soweit erforderlich, der maßgeblichen Teile | betrifft Anspruch | |
| | US - A - 3 036 156 (GILLESPIE)<br>* Spalte 1, Zeilen 19-23; 29-33; 49-54; Spalte 2, Zeilen 53-61; Spalte 3, Zeilen 42-48 *<br>--<br>DE - C - 978 043 (SIEMENS)<br>* Spalte 3, Zeilen 11-40; Zeile 65 - Spalte 4, Zeile 11; Zeilen 21-35; 59-65 *<br>--<br>CH - A - 604 432 (ANSTALT EURO-PÄISCHE HANDELSGESELLSCHAFT)<br>* Spalte 1, Zeilen 1-18; 44-63; Spalte 2, Zeilen 19-27; 39-60; Spalte 3, Zeilen 16-21; 34-40 *<br>---- | 1,5<br><br><br>1,2,4-7,9-11<br><br><br>1,4,5,7,8 | H 04 L 9/02<br><br><br><br>**RECHERCHIERTE SACHGEBIETE (Int. Cl.³)**<br><br>H 04 L 9/02<br>9/00 |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 25-11-1980 | HOLPER |

EPA form 1503.1